(19) **Europäisches Patentamt**
**European Patent Office**
**Office européen des brevets**

(11) **EP 4 651 492 A1**

(12) **EUROPEAN PATENT APPLICATION**
published in accordance with Art. 153(4) EPC

(43) Date of publication:
**19.11.2025 Bulletin 2025/47**

(21) Application number: **24741694.4**

(22) Date of filing: **10.01.2024**

(51) International Patent Classification (IPC):
**H04N 19/593** (2014.01)   **H04N 19/11** (2014.01)
**H04N 19/132** (2014.01)   **H04N 19/59** (2014.01)
**H04N 19/176** (2014.01)   **H04N 19/119** (2014.01)

(52) Cooperative Patent Classification (CPC):
**H04N 19/11; H04N 19/119; H04N 19/132;**
**H04N 19/176; H04N 19/59; H04N 19/593**

(86) International application number:
**PCT/KR2024/000471**

(87) International publication number:
**WO 2024/151073 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.01.2023 KR 20230003500**

(71) Applicant: **LG Electronics Inc.**
**Yeongdeungpo-gu**
**Seoul 07336 (KR)**

(72) Inventors:
• **YOO, Sunmi**
 **Seoul 06772 (KR)**
• **CHOI, Jangwon**
 **Seoul 06772 (KR)**
• **HONG, Myungoh**
 **Seoul 06772 (KR)**

(74) Representative: **Maikowski & Ninnemann**
**Patentanwälte Partnerschaft mbB**
**Postfach 15 09 20**
**10671 Berlin (DE)**

(54) **IMAGE ENCODING/DECODING METHOD AND APPARATUS, AND RECORDING MEDIUM HAVING BITSTREAM STORED THEREIN**

(57)   An image decoding/encoding method and apparatus according to the present disclosure may: on the basis of a left reference sample of the current block, generate a first prediction sample for the current sample within the current block; generate a second prediction sample for the current sample on the basis of an upper reference sample of the current block; and generate a final prediction sample for the current sample on the basis of the weighted sum of the first prediction sample and the second prediction sample. Here, weights for the weighted sum comprises a first weight applied to the first prediction sample and a second weight applied to the second prediction sample, and the first weight may be determined on the basis of one or more gradients calculated from a neighboring region of the current block.

FIG.4

GENERATE FIRST PREDICTION SAMPLE FOR CURRENT SAMPLE — S400

GENERATE SECOND PREDICTION SAMPLE FOR CURRENT SAMPLE — S410

GENERATE FINAL PREDICTION SAMPLE BASED ON WEIGHTED SUM OF FIRST PREDICTION SAMPLE AND SECOND PREDICTION SAMPLE — S420

**Description**

[Technical Field]

The present disclosure relates to an image encoding/decoding method and apparatus, and a recording medium storing a bitstream.

[Background Art]

Recently, the demand for high-resolution and highquality images such as HD (High Definition) images and UHD (Ultra High Definition) images has been increasing in various application fields, and accordingly, highly efficient image compression technologies are being discussed.

There are a variety of technologies such as interprediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure seeks to provide an intra prediction method and device.

The present disclosure seeks to provide a weighted sum of multiple prediction samples and a weight determination method and device therefor.

[Technical Solution]

The image decoding method and device according to the present disclosure may generate a first prediction sample for a current sample in a current block based on a left reference sample of the current block, generate a second prediction sample for the current sample based on a top reference sample of the current block, and generate a final prediction sample for the current sample based on a weighted sum of the first prediction sample and the second prediction sample.

In the image decoding method and device according to the present disclosure, a weight for the weighted sum may include a first weight applied to the first prediction sample and a second weight applied to the second prediction sample, and the first weight may be determined based on one or more gradients calculated from a neighboring region of the current block.

In the image decoding method and device according to the present disclosure, the gradients calculated from the neighboring region may include a first gradient and a second gradient.

In the image decoding method and device according to the present disclosure, the neighboring region may be divided into a first neighboring region and a second neighboring region. Herein, the first neighboring region is a region including one or more reference samples belonging to a top neighboring block of the current block, and the second neighboring region is a region including one or more reference samples belonging to a left neighboring block of the current block.

In the image decoding method and device according to the present disclosure, the first gradient may be derived based on one or more gradients calculated from the first neighboring region of the current block, and the second gradient may be derived based on one or more gradients calculated by applying the one-dimensional filter to the second neighboring region of the current block.

In the image decoding method and device according to the present disclosure, the first gradient may be derived based on one or more horizontal gradients calculated from the first neighboring region of the current block, and the second gradient may be derived based on one or more vertical gradients calculated from the second neighboring region of the current block.

In the image decoding method and device according to the present disclosure, the first gradient may be derived based on one or more horizontal gradients calculated from the first neighboring region of the current block and one or more horizontal gradients calculated from the second neighboring region of the current block, and the second gradient may be derived based on one or more vertical gradients calculated from the first neighboring region of the current block and one or more vertical gradients calculated from the second neighboring region of the current block.

In the image decoding method and device according to the present disclosure, the first gradient may be determined based on whether the first gradient is less than the second gradient.

In the image decoding method and device according to the present disclosure, when the first gradient is less than the second gradient, the first weight may be determined based on a maximum value of the first gradient and the second gradient, when the first gradient is greater than or equal to the second gradient, the first weight may be determined based on a minimum value of the first gradient and the second gradient.

In the image decoding method and device according to the present disclosure, when the first gradient is greater than or equal to the second gradient, the first weight may be determined based on a maximum value of the first gradient and the second gradient, and when the first gradient is less than the second gradient, the first weight may be determined based on a minimum value of the first gradient and the second gradient.

In the image decoding method and device according to the present disclosure, the first weight may be determined based on at least one of whether a width of the current block is greater than a height of the current block or whether the width and the height of the current block is equal.

In the image decoding method and device according to the present disclosure, when the width of the current block is less than the height of the current block, the first weight may be determined based on a maximum value of the first gradient and the second gradient, and when the width of the current block is greater than or equal to the height of the current block, the first weight may be determined based on a minimum value of the first gradient and the second gradient.

In the image decoding method and device according to the present disclosure, when the width of the current block is greater than or equal to the height of the current block, the first weight may be determined based on a maximum value of the first gradient and the second gradient, and when the width of the current block is less than the height of the current block, the first weight may be determined based on a minimum value of the first gradient and the second gradient.

In the image decoding method and device according to the present disclosure, a weight determination based on the one or more gradients may be adaptively performed based on at least one of a difference between the gradients calculated from the neighboring region, a size of the current block, a flag, or whether a reference sample in the neighboring region is available.

The image encoding method and device according to the present disclosure may generate a first prediction sample for a current sample in a current block based on a left reference sample of the current block, generate a second prediction sample for the current sample based on a top reference sample of the current block, and generate a final prediction sample for the current sample based on a weighted sum of the first prediction sample and the second prediction sample. Herein, a weight for the weighted sum may include a first weight applied to the first prediction sample and a second weight applied to the second prediction sample, and the first weight may be determined based on one or more gradients calculated from a neighboring region of the current block.

A computer-readable digital storage medium storing encoded video/image information that causes performing the image decoding method by a decoding apparatus according to the present disclosure is provided.

A computer-readable digital storage medium storing video/image information generated according to the image encoding method according to the present disclosure is provided.

A method and a device for transmitting video/image information generated according to an image encoding method according to the present disclosure are provided.

[Advantageous Effects]

According to the present disclosure, prediction performance can be improved by considering local variations within a neighboring region in addition to the linear variations in the horizontal/vertical directions within the current block.

According to the present disclosure, unintended artifacts can be limited by applying less local variations existing within a neighboring region, thereby improving prediction performance.

According to the present disclosure, improvement in prediction performance can be expected by considering a direction in which linear interpolation prediction is expected to be more accurate.

[Description of Drawings]

FIG. 1 shows a video/image coding system according to the present disclosure.

FIG. 2 shows a schematic block diagram of an encoding apparatus to which an embodiment of the present disclosure is applicable and encoding of video/image signals is performed.

FIG. 3 shows a schematic block diagram of a decoding apparatus to which an embodiment of the present disclosure is applicable and decoding of video/image signals is performed.

FIG. 4 shows an image decoding method performed by a decoding apparatus 300 as an embodiment according to the present disclosure.

FIG. 5 shows a schematic configuration of an intra predictor (331) that performs an image decoding method according to the present disclosure.

FIG. 6 shows an image encoding method performed by an encoding apparatus 200 as an embodiment according to the present disclosure.

FIG. 7 shows a schematic configuration of an intra predictor (222) that performs an image encoding method according to the present disclosure.

FIG. 8 shows an example of a contents streaming system to which embodiments of the present disclosure may be applied.

[Best Mode]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular area composed of a plurality of CTUs within a specific tile column and a specific tile row of one picture. A tile column is a rectangular area of CTUs having the same height as that of a picture and a width designated by a syntax requirement of a picture parameter set. A tile row is a rectangular area of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular area of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific area of a picture and information related to a corresponding area. One unit may include one luma block and two chroma (ex. cb, cr) blocks. In some cases, a unit may be used interchangeably with a term such as a block or an area, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

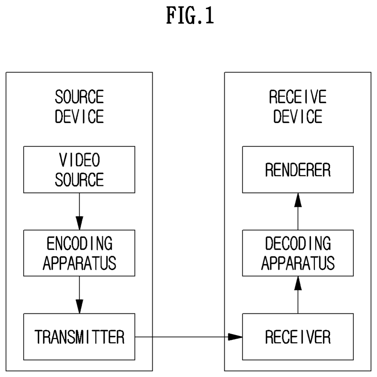

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

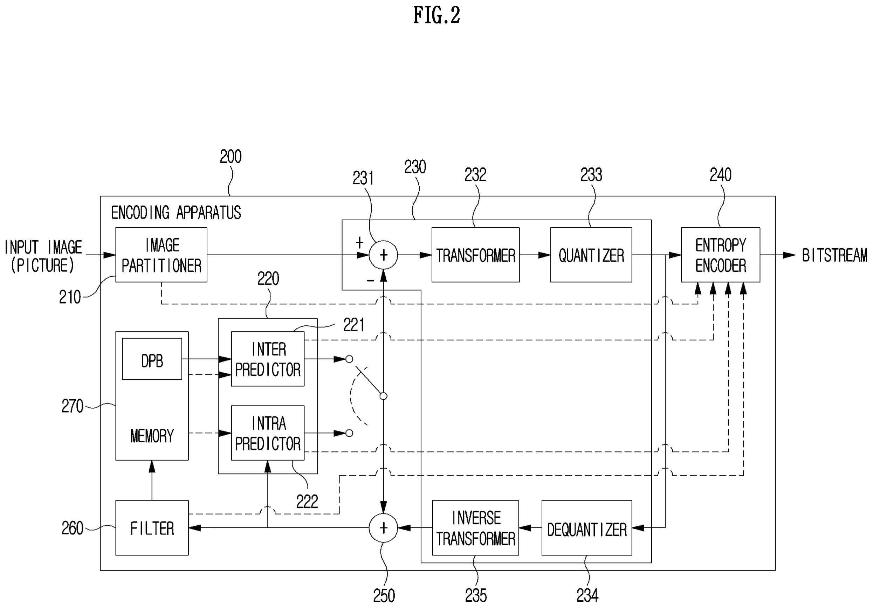

FIG. 2 shows a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) accorrding to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an area, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a surrounding block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

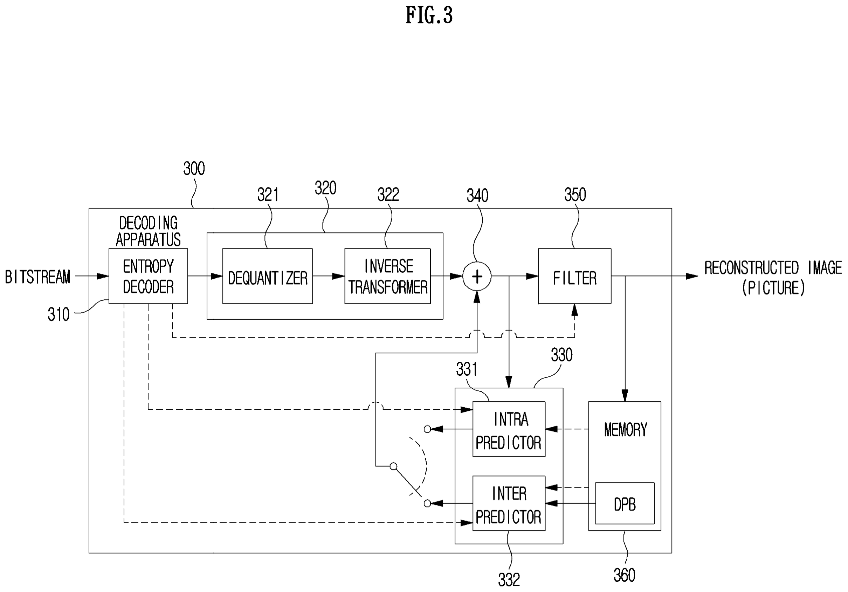

FIG. 3 shows a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 331 and an intra predictor 332. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the large coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a surrounding block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter predictor 332. A memory 360 may store motion information of a block from which motion information in a current picture is derived (or decoded) and/or motion information of blocks in a pre-reconstructed picture. The stored motion information may be transmitted to an inter predictor 332 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

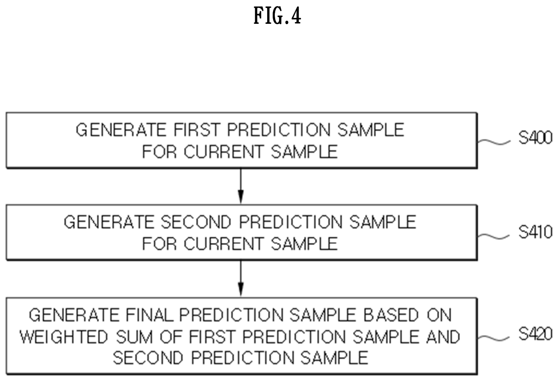

FIG. 4 shows an image decoding method performed by a decoding apparatus according to the present disclosure.

Referring to FIG. 4, a first prediction sample for a current sample within a current block may be generated (S400).

The current sample refers to a sample that is currently a prediction target within the current block. The first prediction sample may be generated based on one or more samples belonging to the left neighboring region of the current block. Here, the left neighboring region may be a region including at least one of the left neighboring block, the top-left neighboring block, or the bottom-left neighboring block adjacent to the current block.

The first prediction sample may be generated based on one or more samples located on the same horizontal line as the first prediction sample among the samples belonging to the left neighboring region.

The first prediction sample may be generated based on a weighted sum of a sample belonging to the left neighboring region of the current block and a sample belonging to the top-right neighboring region of the current block. For example, the first prediction sample may be derived as in the following Equation 1.

[Equation 1]

$$pred_{Horizontal}(x,y) = \big((W-1-x) * rec(-1,y) + (x+1) * rec(W,-1) + (W \gg 1)\big)$$

$$\gg log_2 W$$

In Equation 1, $pred_{Horizontal}$ represents a first prediction sample of the current block, and W and H represent the width and height of the current block, respectively. (x, y) represents the coordinate of a first prediction sample in the current block, where x is in the range of 0 to (W-1), and y is in the range of 0 to (H-1). When the position of the top-left sample in the current block is (0,0), rec(-1, y) may represent a left reference sample of the current block. For example, the left reference sample may represent a sample belonging to a left sample line that has already been reconstructed before coding the current block, and may represent a sample having the same y-coordinate as a first prediction sample. Similarly, rec(W,-1) may represent a top-right reference sample of the current block. For example, the top-right reference sample may represent a sample adjacent to the top-right corner of the current block, which has already been reconstructed before coding the current block.

Referring to FIG. 4, a second prediction sample for the current sample may be generated (S410).

A second prediction sample of the current block may have the same position or coordinate as a first prediction sample described above. A second prediction sample of the current block may be generated based on one or more samples belonging to a top neighboring region of the current block. Here, the top neighboring region may be a region including at least one of a top neighboring block, a top-left neighboring block, or a top-right neighboring block adjacent to the current block.

The second prediction sample may be generated based on one or more samples located on the same vertical line as the second prediction sample among the samples belonging to the top neighboring region.

The second prediction sample may be generated based on a weighted sum of a sample belonging to the top neighboring region of the current block and a sample belonging to the bottom-left neighboring region of the current block. For example, the second prediction sample may be derived as in the following Equation 2.

[Equation 2]

$$pred_{vertical}(x,y) = \big((H-1-y) * rec(x,-1) + (y+1) * rec(-1,H) + (H \gg 1)\big)$$

$$\gg log_2 H$$

In Equation 2, $pred_{vertical}$ represents the second prediction sample of the current block, and W and H represent the width and height of the current block, respectively. (x, y) represents the coordinate of the second prediction sample in the current block, where x is in the range of 0 to (W-1), and y is in the range of 0 to (H-1). When the position of the top-left sample in the current block is (0,0), rec(x,-1) may represent the top reference sample of the current block. For example, the top reference sample may represent a sample belonging to the top sample line that has already been reconstructed before coding the current block, and may represent a sample having the same x-coordinate as the second prediction sample. Similarly, rec(-1, H) may represent the bottom-left reference sample of the current block. For example, the bottom-left reference sample may represent a sample adjacent to the bottom-left corner of the current block, which has already been reconstructed before coding the current block.

Referring to FIG. 4, a final prediction sample for the current sample may be generated based on a weighted sum of the first prediction sample and the second prediction sample (S420).

The final prediction sample ($pred_{Final}$) for the current sample may be derived as in the following Equation 3.

[Equation 3]

$$pred_{Final}(x,y) = w0 * pred_{Horizontal} + w1 * pred_{vertical}$$

The weight for the weighted sum of the first and second prediction samples may include at least one of a first weight (w0) applied to the first prediction sample and a second weight (w1) applied to the second prediction sample.

The weight may be set to a weight pre-set identically to the encoding device and the decoding device. The pre-set first weight and second weight may be the same. For example, the pre-set weigh (w0, w1) may be (1/2, 1/2). However, it is not limited to this, and the sum of w0 and w1 may satisfy 1, but w0 and w1 may have different values.

Alternatively, the weight may be determined based on one or more gradients derived from the neighboring region of the current block. Hereinafter, a method of determining the weight by using the gradient of reference samples belonging to the neighboring region of the current block will be described in detail.

Embodiment 1

A gradient may be derived from the neighboring region by applying a filter having a predetermined size to a reference sample belonging to the neighboring region of the current block. Here, the neighboring region may be divided into a first neighboring region and a second neighboring region. The gradient may be derived for each of the first neighboring region and the second neighboring region.

The first neighboring region may be composed of one or more reference samples belonging to a top neighboring block of the current block. The first neighboring region may be composed of one or more reference samples belonging to a top neighboring block of the current block and one or more reference samples belonging to a top-left neighboring block of the current block. The first neighboring region may be composed of one or more reference samples belonging to a top neighboring block of the current block and one or more reference samples belonging to a top-right neighboring block of the current block. The first neighboring region may be composed of one or more reference samples belonging to a top neighboring block of the current block, one or more reference samples belonging to a top-left neighboring block of the current block, and one or more reference samples belonging to a top-right neighboring block of the current block. However, the present invention is not limited thereto, and the first neighboring region may further include one or more reference samples belonging to a bottom-left neighboring block of the current block.

One or more reference samples belonging to the top neighboring block may belong to the bottommost sample line within the top neighboring block. One or more reference samples belonging to the top-left neighboring block may belong to the bottommost sample line within the top-left neighboring block. One or more reference samples belonging to the top-right neighboring block may belong to the bottommost sample line within the top-right neighboring block. One or more reference samples belonging to the bottom-left neighboring block may belong to the rightmost sample line or the topmost sample line within the bottom-left neighboring block.

The second neighboring region may be composed of one or more reference samples belonging to a left neighboring block of the current block. The second neighboring region may be composed of one or more reference samples belonging to a left neighboring block of the current block and one or more reference samples belonging to a top-left neighboring block of the current block. The second neighboring region may be composed of one or more reference samples belonging to a left neighboring block of the current block and one or more reference samples belonging to a bottom-left neighboring block of the current block. The second neighboring region may be composed of one or more reference samples belonging to a left neighboring block of the current block, one or more reference samples belonging to a top-left neighboring block of the current block, and one or more reference samples belonging to a bottom-left neighboring block of the current block. However, the present invention is not limited thereto, and the second neighboring region may further include one or more reference samples belonging to a top-right neighboring block of the current block.

One or more reference samples belonging to the left neighboring block may belong to the rightmost sample line within the left neighboring block. One or more reference samples belonging to the top-left neighboring block may belong to the rightmost sample line within the top-left neighboring block. One or more reference samples belonging to the bottom-left neighboring block may belong to the rightmost sample line within the bottom-left neighboring block. One or more reference samples belonging to the top-right neighboring block may belong to the bottommost sample line or the leftmost sample line within the top-right neighboring block.

The filter may be a one-dimensional filter (1-D filter). The filter may be applied in units of Nxl-sized windows within the neighboring region. In this case, each window may include one reference sample and (N-1) neighboring sample(s) located to the left and/or right of the reference sample. Alternatively, the filter may be applied in units of 1xN-sized windows within the neighboring region. In this case, each window may include one reference sample and (N-1) neighboring sample(s) located above and/or below the reference sample. N may be 3. However, the present invention is not limited thereto, and N may be an integer of 4, 5, or more.

For example, it is assumed that the filter is applied in units of 3x1 windows within the neighboring region. In this case, the filter for calculating the gradient at the reference sample position may be defined as in the following Equation 4.

[Equation 4]

$$G = (-a + b) / n$$

In Equation 4, G represents the gradient at the reference sample position, and a and b represent the left and right samples of the reference sample, respectively. In Equation 4, n may be an integer greater than or equal to 1. The value calculated according to the Equation 4 or its absolute value may be used as the gradient at the reference sample position.

Alternatively, it is assumed that the filter is applied in units of 1x3 windows within the neighboring region. In this case, the filter for calculating the gradient at the reference sample position may be defined as in the following Equation 5.

[Equation 5]

$$G = (-c + d) / n$$

In Equation 5, G represents the gradient at the reference sample position, and c and d represent the top and bottom samples of the reference sample, respectively. In Equation 5, n may be an integer greater than or equal to 1. The value calculated according to Equation 5 or its absolute value may be used as the gradient at the corresponding reference sample position.

For the first neighboring region, a filter may be applied in units of Nxl-sized windows, and for the second neighboring region, a filter may be applied in units of 1xN-sized windows. Alternatively, for the first neighboring region, a filter may be applied in units of 1xN-sized windows, and for the second neighboring region, a filter may be applied in units of Nxl-sized windows. Alternatively, a filter may be applied in units of windows with the same size for the first neighboring region and the second neighboring region.

By applying the filter to one or more available reference samples within the first neighboring region, a gradient at each of the reference sample positions may be calculated. A first gradient for determining a weight may be derived based on the calculated one or more gradients. For example, a gradient may be calculated for each reference sample position in the first neighboring region, and an accumulated value thereof may be calculated. The accumulated value may be set as the first gradient for determining the weight. Here, the accumulated value may be defined as a sum of gradients, an absolute value of a sum of gradients, a sum of absolute values of gradients, or a sum of squared values of gradients.

Similarly, By applying the filter to one or more available reference samples within the second neighboring region, a gradient at each of the reference sample positions may be calculated. A second gradient for determining a weight may be derived based on the calculated one or more gradients. For example, a gradient may be calculated for each reference sample position in the second neighboring region, and an accumulated value thereof may be calculated. The accumulated value may be set as the second gradient for determining the weight. Here, the accumulated value may be defined as a sum of gradients, an absolute value of a sum of gradients, a sum of absolute values of gradients, or a sum of squared values of gradients.

The number of reference samples from which the gradient is calculated within the first neighboring region may be 1 or may be 2 or more. For example, the number of reference samples within the first neighboring region may be less than or equal to the width (W) of the current block. Alternatively, the number of reference samples within the first neighboring region may be less than or equal to (2*W+1). Alternatively, the number of reference samples within the first neighboring region may be less than or equal to the sum of the width (W) and the height (H) of the current block.

The number of reference samples from which the gradient is calculated within the second neighboring region may be 1 or may be 2 or more. For example, the number of reference samples within the second neighboring region may be less than or equal to the height (H) of the current block. Alternatively, the number of reference samples within the second neighboring region may be less than or equal to (2*H+1). Alternatively, the number of reference samples within the second neighboring region may be less than or equal to the sum of the width (W) and the height (H) of the current block.

A weight for the weighted sum of the first and second prediction samples may be determined based on at least one of the first gradient or the second gradient calculated by the above-described method. For example, a first weight may be determined based on a maximum value of the first gradient and the second gradient, and a second weight may be determined based on a minimum value of the first gradient and the second gradient. Alternatively, a first weight may be determined based on a minimum value of the first gradient and the second gradient, and a second weight may be determined based on a maximum value of the first gradient and the second gradient. The second weight may be determined based on the first weight.

The weight may be determined based on whether the first gradient is less than the second gradient.

For example, when the first gradient and the second gradient described above are $G_1$ and $G_2$, respectively, the weight may be determined as in the following Equation 6. When the number of available reference samples in the first neighboring region and the number of available reference samples in the second neighboring region are different from each other, $G_1$ and/or $G_2$ may be normalized values.

[Equation 6]

$$w0 = \begin{cases} \dfrac{\max(G_1, G_2)}{G_1 + G_2}, G_1 < G_2 \\ \dfrac{\min(G_1, G_2)}{G_1 + G_2}, G_1 \geq G_2 \end{cases}$$

$$w1 = 1 - w0$$

According to Equation 6, when $G_1$ is less than $G_2$, w0 may be determined based on the maximum value of $G_1$ and $G_2$. On the other hand, when $G_1$ is greater than or equal to $G_2$, w0 may be determined based on the minimum value of $G_1$ and $G_2$. w1 may be determined as a value obtained by subtracting w0 from 1.

A larger weight may be assigned to a prediction sample that refer to a neighboring region where the gradient is relatively large. In this way, by considering local variations within the neighboring region in addition to the linear variations in the horizontal/vertical directions within the current block, the prediction performance may be improved.

Alternatively, when the first gradient and the second gradient described above are referred to as $G_1$ and $G_2$, respectively, the weight may be determined as in the following Equation 7. When the number of available reference samples in the first neighboring region and the number of available reference samples in the second neighboring region are different from each other, $G_1$ and/or $G_2$ may be normalized values.

[Equation 7]

$$w0 = \begin{cases} \dfrac{\max(G_1, G_2)}{G_1 + G_2}, G_1 \geq G_2 \\ \dfrac{\min(G_1, G_2)}{G_1 + G_2}, G_1 < G_2 \end{cases}$$

$$w1 = 1 - w0$$

According to Equation 7, when $G_1$ is greater than or equal to $G_2$, w0 may be determined based on the maximum value of $G_1$ and $G_2$. On the other hand, when $G_1$ is less than $G_2$, w0 may be determined based on the minimum value of $G_1$ and $G_2$. w1 may be determined as a value obtained by subtracting w0 from 1.

A larger weight may be assigned to a prediction sample that refer to a neighboring region where the gradient is relatively small. In this way, prediction performance can be improved by applying less local variation within the reference sample to limit unintended artifacts.

The weight may be determined based on at least one of whether the width (W) and the height (H) of the current block are the same or whether the width (W) of the current block is greater than the height (H) of the current block.

For example, when the first gradient and the second gradient described above are $G_1$ and $G_2$, respectively, the weight may be determined as in the following Equation 8. When the number of available reference samples in the first neighboring region and the number of available reference samples in the second neighboring region are different from each other, $G_1$ and/or $G_2$ may be normalized values.

[Equation 8]

$$w0 = \begin{cases} \dfrac{\max(G_1, G_2)}{G_1 + G_2}, H < W \\ \dfrac{\min(G_1, G_2)}{G_1 + G_2}, H > W \\ 0.5, \quad H = W \end{cases}$$

$$w1 = 1 - w0$$

According to Equation 8, when W is greater than H, w0 may be determined based on the maximum value of $G_1$

and $G_2$. On the other hand, when W is less than H, w0 may be determined based on the minimum value of $G_1$ and $G_2$. When W and H are equal, w0 may be determined as 0.5. w1 may be determined as the value obtained by subtracting w0 from 1.

When the width of the current block is greater than the height, there may be a case where the correlation between the top reference sample and the current block is low, in which case horizontal linear interpolation may be more accurate than vertical linear interpolation. Conversely, when the width of the current block is less than the height, there may be a case where the correlation between the left reference sample and the current block is low, in which case vertical linear interpolation may be more accurate than horizontal linear interpolation. In this way, by assigning a large weight to the direction in which linear interpolation prediction is expected to be more accurate, it is expected that the prediction performance will be improved.

Alternatively, when the first gradient and the second gradient described above are referred to as $G_1$ and $G_2$, respectively, the weight may be determined as in the following Equation 9. When the number of available reference samples in the first neighboring region and the number of available reference samples in the second neighboring region are different from each other, $G_1$ and/or $G_2$ may be normalized values.

$$[\text{Equation } 9]$$

$$w0 = \begin{cases} \dfrac{\max(G_1, G_2)}{G_1 + G_2}, & H > W \\[2mm] \dfrac{\min(G_1, G_2)}{G_1 + G_2}, & H < W \\[2mm] 0.5, & H = W \end{cases}$$

$$w1 = 1 - w0$$

According to Equation 9, when W is less than H, w0 may be determined based on the maximum value of $G_1$ and $G_2$. On the other hand, when W is greater than H, w0 may be determined based on the minimum value of $G_1$ and $G_2$. When W and H are equal, w0 may be determined as 0.5. w1 may be determined as the value obtained by subtracting w0 from 1.

When the width of the current block is greater than the height, vertical linear interpolation has a shorter distance from the reference sample than horizontal linear interpolation, so the prediction is more likely to be accurate. Conversely, when the width of the current block is less than the height, horizontal linear interpolation has a shorter distance from the reference sample than vertical linear interpolation, so the prediction is more likely to be accurate. In this way, by assigning a large weight to the direction in which linear interpolation prediction is expected to be more accurate, it is expected that the prediction performance will be improved.

Embodiment 2

A gradient may be calculated from the neighboring region by applying a filter having a predetermined size to a reference sample belonging to the neighboring region of the current block. Here, the neighboring region may be divided into a first neighboring region and a second neighboring region. Either a horizontal gradient or a vertical gradient may be calculated for each of the first neighboring region and the second neighboring region.

The ranges of the first and second neighboring regions according to the present disclosure are as described in Embodiment 1. Here, one or more reference samples belonging to the top neighboring block may belong to two or more bottom sample lines within the top neighboring block. One or more reference samples belonging to the top-left neighboring block may belong to two or more bottom sample lines within the top-left neighboring block. One or more reference samples belonging to the top-right neighboring block may belong to two or more bottom sample lines within the top-right neighboring block. One or more reference samples belonging to the bottom-left neighboring block may belong to two or more right sample lines or top sample lines within the bottom-left neighboring block. Similarly, one or more reference samples belonging to the left neighboring block may belong to two or more right sample lines within the left neighboring block. One or more reference samples belonging to the top-left neighboring block may belong to two or more right sample lines within the top-left neighboring block. One or more reference samples belonging to the bottom-left neighboring block may belong to two or more right sample lines within the bottom-left neighboring block. One or more reference samples belonging to the top-right neighboring block may belong to two or more bottom sample lines or left sample lines within the top-right neighboring block.

The filter may be a two-dimensional filter (2-D filter). The filter may be applied in units of NxN-sized windows within the neighboring region. Each window may include one reference sample and $(N^2-1)$ neighboring samples adjacent to the reference sample. Here, N may be 3. However, the present invention is not limited thereto, and N may be an integer of 4, 5, or more. Alternatively, the filter may be applied in units of non-square windows, such as 2x3, 3x2, etc.

For example, it is assumed that a filter is applied in units of 3x3 windows within a neighboring region. In this case, at least one of a horizontal gradient and a vertical gradient may be calculated for the neighboring region. To this end, a filter for calculating a horizontal gradient (hereinafter referred to as a first filter) and a filter for calculating a vertical gradient (hereinafter referred to as a second filter) may be defined, respectively.

The first filter for calculating the horizontal gradient at the reference sample position within the neighboring region may be defined as in the following Equation 10.

[Equation 10]

$$G_x = (a - c + 2*d - 2*e + f - h)/n$$

In Equation 10, $G_x$ represents a horizontal gradient at a reference sample position, and a, c, d, e, f, and h represent a top-left sample, a top-right sample, a left sample, a right sample, a bottom-left sample, and a bottom-right sample, respectively, with respect to the reference sample. In Equation 10, n may be an integer greater than or equal to 1. According to Equation 10, a horizontal gradient at the corresponding reference sample position may be calculated through a weighted sum operation based on a distance from the reference sample. A value calculated according to Equation 10 or an absolute value thereof may be used as a horizontal gradient.

A second filter for calculating the vertical gradient at the reference sample position within the neighboring region may be defined as in the following Equation 11.

[Equation 11]

$$G_y = (-a + f - 2*b + 2*g - c + h)/n$$

In Equation 11, $G_y$ represents a vertical gradient at a reference sample position, and a, b, c, f, g, and h represent a top-left sample, a top sample, a top-right sample, a bottom-left sample, a bottom sample, and a bottom-right sample, respectively, with respect to the reference sample. In Equation 11, n may be an integer greater than or equal to 1. According to Equation 11, a vertical gradient at the corresponding reference sample position may be calculated through a weighted sum operation based on a distance from the reference sample. A value calculated according to Equation 11 or an absolute value thereof may be used as the vertical gradient.

A first filter for calculating a horizontal gradient may be applied for the first neighboring region, and a second filter for calculating a vertical gradient may be applied for the second neighboring region. Alternatively, a first filter for calculating a vertical gradient may be applied for the first neighboring region, and a second filter for calculating a horizontal gradient may be applied for the second neighboring region. Alternatively, the same filter may be applied for the first neighboring region and the second neighboring region.

By applying the first filter to one or more available reference samples within the first neighboring region, a horizontal gradient at each of the reference sample positions may be calculated. A first gradient for determining a weight may be derived based on the calculated one or more horizontal gradients. For example, a horizontal gradient may be calculated for each reference sample position in the first neighboring region, and an accumulated value thereof may be derived. The accumulated value may be set as the first gradient for determining the weight. Here, the accumulated value may be defined as a sum of horizontal gradients, an absolute value of a sum of horizontal gradients, a sum of absolute values of horizontal gradients, or a sum of squared values of horizontal gradients.

By applying the second filter to one or more available reference samples within the second neighboring region, a vertical gradient at each of the reference sample positions may be calculated. A second gradient for determining a weight may be derived based on the calculated one or more vertical gradients. For example, a vertical gradient may be calculated for each reference sample position in the second neighboring region, and an accumulated value thereof may be calculated. The accumulated value may be set as the second gradient for determining the weight. Here, the accumulated value may be defined as a sum of the vertical gradients, an absolute value of the sum of the vertical gradients, a sum of the absolute values of the vertical gradients, or a sum of squared values of the vertical gradients.

The number of reference samples from which the horizontal gradient is calculated within the first neighboring region may be 1 or may be 2 or more. For example, the number of reference samples within the first neighboring region may be less than or equal to the width (W) of the current block. Alternatively, the number of reference samples within the first neighboring region may be less than or equal to (2*W+1). Alternatively, the number of reference samples within the first neighboring region may be less than or equal to the sum of the width (W) and the height (H) of the current block.

The number of reference samples from which the vertical gradient is calculated within the second neighboring region may be 1 or may be 2 or more. For example, the number of reference samples within the second neighboring region may be less than or equal to the height (H) of the current block. Alternatively, the number of reference samples within the second neighboring region may be less than or equal to (2*H+1). Alternatively, the number of reference samples within the second neighboring region may be less than or equal to the sum of the width (W) and the height (H) of the current block.

A weight for the weighted sum of the first and second prediction samples may be determined based on at least one of the first gradient or the second gradient calculated by the above-described method. For example, the first weight may be determined based on a maximum value of the first gradient and the second gradient, and the second weight may be determined based on a minimum value of the first gradient and the second gradient. Alternatively, the first weight may be determined based on a minimum value of the first gradient and the second gradient, and the second weight may be determined based on a maximum value of the first gradient and the second gradient. The second weight may be determined based on the first weight.

The weight may be determined based on whether the first gradient is less than the second gradient.

For example, when the first gradient and the second gradient described above are $G_{1x}$ and $G_{2y}$, respectively, the weight may be determined as in the following Equation 12. When the number of available reference samples in the first neighboring region and the number of available reference samples in the second neighboring region are different from each other, $G_{1x}$ and/or $G_{2y}$ may be normalized values.

[Equation 12]

$$w0 = \begin{cases} \dfrac{\max(G_{1x}, G_{2y})}{G_{1x} + G_{2y}}, G_{1x} < G_{2y} \\ \dfrac{\min(G_{1x}, G_{2y})}{G_{1x} + G_{2y}}, G_{1x} \geq G_{2y} \end{cases}$$

$$w1 = 1 - w0$$

According to Equation 12, when $G_{1x}$ is less than $G_{2y}$, w0 may be determined based on the maximum value of $G_{1x}$ and $G_{2y}$. On the other hand, when $G_{1x}$ is greater than or equal to $G_{2y}$, w0 may be determined based on the minimum value of $G_{1x}$ and $G_{2y}$. w1 may be determined as a value obtained by subtracting w0 from 1.

A larger weight may be assigned to a prediction sample that refer to a neighboring region where the gradient is relatively large. In this way, by considering local variations within the neighboring region in addition to the linear variations in the horizontal/vertical directions within the current block, the prediction performance may be improved.

Alternatively, when the first gradient and the second gradient described above are $G_{1x}$ and $G_{2y}$, respectively, the weight may be determined as in the following Equation 13. When the number of available reference samples in the first neighboring region and the number of available reference samples in the second neighboring region are different from each other, $G_{1x}$ and/or $G_{2y}$ may be normalized values.

[Equation 13]

$$w0 = \begin{cases} \dfrac{\max(G_{1x}, G_{2y})}{G_{1x} + G_{2y}}, G_{1x} \geq G_{2y} \\ \dfrac{\min(G_{1x}, G_{2y})}{G_{1x} + G_{2y}}, G_{1x} < G_{2y} \end{cases}$$

$$w1 = 1 - w0$$

According to Equation 13, when $G_{1x}$ is greater than or equal to $G_{2y}$, w0 may be determined based on the maximum value of $G_{1x}$ and $G_{2y}$. On the other hand, when $G_{1x}$ is less than $G_{2y}$, w0 may be determined based on the minimum value of $G_{1x}$ and $G_{2y}$. w1 may be determined as a value obtained by subtracting w0 from 1.

A larger weight may be assigned to a prediction sample that refer to a neighboring region where the gradient is relatively small. In this way, prediction performance can be improved by applying less local variation within the reference sample to limit unintended artifacts.

The weight may be determined based on at least one of whether the width (W) and the height (H) of the current block are the same or whether the width (W) of the current block is greater than the height (H) of the current block.

For example, when the first gradient and the second gradient described above are $G_{1x}$ and $G_{2y}$, respectively, the weight may be determined as in the following Equation 14. When the number of available reference samples in the first neighboring region and the number of available reference samples in the second neighboring region are different from each other, $G_{1x}$ and/or $G_{2y}$ may be normalized values.

[Equation 14]

$$w0 = \begin{cases} \dfrac{\max\,(G_{1x}, G_{2y})}{G_{1x} + G_{2y}}, H < W \\ \dfrac{\min\,(G_{1x}, G_{2y})}{G_{1x} + G_{2y}}, H > W \\ 0.5, \quad H = W \end{cases}$$

$$w1 = 1 - w0$$

According to Equation 14, when W is greater than H, w0 may be determined based on the maximum value of $G_{1x}$ and $G_{2y}$. On the other hand, when W is less than H, w0 may be determined based on the minimum value of $G_{1x}$ and $G_{2y}$. When W and H are equal, w0 may be determined as 0.5. w1 may be determined as the value obtained by subtracting w0 from 1.

When the width of the current block is greater than the height, there may be a case where the correlation between the top reference sample and the current block is low, in which case horizontal linear interpolation may be more accurate than vertical linear interpolation. Conversely, when the width of the current block is less than the height, there may be a case where the correlation between the left reference sample and the current block is low, in which case vertical linear interpolation may be more accurate than horizontal linear interpolation. In this way, by assigning a large weight to the direction in which linear interpolation prediction is expected to be more accurate, it is expected that the prediction performance will be improved.

Alternatively, when the first gradient and the second gradient described above are referred to as $G_{1x}$ and $G_{2y}$, respectively, the weight may be determined as in the following Equation 15. When the number of available reference samples in the first neighboring region and the number of available reference samples in the second neighboring region are different from each other, $G_{1x}$ and/or $G_{2y}$ may be normalized values.

[Equation 15]

$$w0 = \begin{cases} \dfrac{\max\,(G_{1x}, G_{2y})}{G_{1x} + G_{2y}}, H > W \\ \dfrac{\min\,(G_{1x}, G_{2y})}{G_{1x} + G_{2y}}, H < W \\ 0.5, \quad H = W \end{cases}$$

$$w1 = 1 - w0$$

According to Equation 15, when W is less than H, w0 may be determined based on the maximum value of $G_{1x}$ and $G_{2y}$. On the other hand, when W is greater than H, w0 may be determined based on the minimum value of $G_{1x}$ and $G_{2y}$. When W and H are equal, w0 may be determined as 0.5. w1 may be determined as the value obtained by subtracting w0 from 1.

When the width of the current block is greater than the height, vertical linear interpolation has a shorter distance from the reference sample than horizontal linear interpolation, so the prediction is more likely to be accurate. Conversely, when the width of the current block is less than the height, horizontal linear interpolation has a shorter distance from the reference sample than vertical linear interpolation, so the prediction is more likely to be accurate. In this way, by assigning a large weight to the direction in which linear interpolation prediction is expected to be more accurate, it is expected that the prediction performance will be improved.

Embodiment 3

A filter having a predetermined size may be applied to a reference sample belonging to a neighboring region of a current block to calculate a gradient from the neighboring region. Here, the neighboring region may be divided into a first neighboring region and a second neighboring region. The ranges of the first and second neighboring regions are as described in Embodiment 2. In the present disclosure, a horizontal gradient and a vertical gradient may be calculated for each of the first neighboring region and the second neighboring region.

The filter may be a two-dimensional filter (2-D filter). A first filter for calculating a horizontal gradient and a second filter for calculating a vertical gradient may be defined, respectively. This is as described in Embodiment 2, and any duplicate description will be omitted here.

For the first neighboring region, a first filter for calculating a horizontal gradient and a second filter for calculating a vertical gradient may be applied. Similarly, for the second neighboring region, a first filter for calculating a horizontal gradient and a second filter for calculating a vertical gradient may be applied.

Specifically, the first filter may be applied to one or more reference samples available in the first neighboring region to calculate a horizontal gradient at each of the corresponding reference sample positions. The calculated one or more horizontal gradients may be accumulated to calculate a first horizontal accumulation value. In addition, the first filter may be applied to one or more reference samples available in the second neighboring region to calculate a horizontal gradient at each of the corresponding reference sample positions. The calculated one or more horizontal gradients may be accumulated to calculate a second horizontal accumulation value. Based on the above-described first horizontal accumulation value and second horizontal accumulation value, a first gradient for determining the weight may be derived. Here, the first or second horizontal accumulation value may be defined as a sum of horizontal gradients, an absolute value of a sum of horizontal gradients, a sum of absolute values of horizontal gradients, or a sum of squared values of horizontal gradients.

The second filter may be applied to one or more reference samples available in the first neighboring region to calculate a vertical gradient at each of the reference sample positions. The calculated one or more vertical gradients may be accumulated to calculate a first vertical accumulation value. In addition, the second filter may be applied to one or more reference samples available in the second neighboring region to calculate a vertical gradient at each of the reference sample positions. The calculated one or more vertical gradients may be accumulated to calculate a second vertical accumulation value. Based on the above-described first vertical accumulation value and second vertical accumulation value, a second gradient for determining the weight may be derived. Here, the first or second vertical accumulation value may be defined as a sum of the vertical gradients, an absolute value of the sum of the vertical gradients, a sum of the absolute values of the vertical gradients, or a sum of squared values of the vertical gradients.

The number of reference samples from which horizontal/vertical gradients are calculated within the first neighboring region may be 1 or may be 2 or more. For example, the number of reference samples within the first neighboring region may be less than or equal to the width (W) of the current block. Alternatively, the number of reference samples within the first neighboring region may be less than or equal to (2*W+1). Alternatively, the number of reference samples within the first neighboring region may be less than or equal to the sum of the width (W) and the height (H) of the current block.

The number of reference samples from which horizontal/vertical gradients are calculated within the second neighboring region may be 1 or may be 2 or more. For example, the number of reference samples within the second neighboring region may be less than or equal to the height (H) of the current block. Alternatively, the number of reference samples within the second neighboring region may be less than or equal to (2*H+1). Alternatively, the number of reference samples within the second neighboring region may be less than or equal to the sum of the width (W) and the height (H) of the current block.

A weight for the weighted sum of the first and second prediction samples may be determined based on at least one of the first gradient or the second gradient calculated by the above-described method. For example, the first weight may be determined based on a maximum value of the first gradient and the second gradient, and the second weight may be determined based on a minimum value of the first gradient and the second gradient. Alternatively, the first weight may be determined based on a minimum value of the first gradient and the second gradient, and the second weight may be determined based on a maximum value of the first gradient and the second gradient. The second weight may be determined based on the first weight.

The weight may be determined based on whether the first gradient is less than the second gradient.

For example, when the first gradient and the second gradient described above are $G_x$ and $G_y$, respectively, the weight may be determined as in the following Equation 16. When the number of available reference samples in the first neighboring region and the number of available reference samples in the second neighboring region are different from each other, $G_x$ and/or $G_y$ may be normalized values.

[Equation 16]

$$w0 = \begin{cases} \dfrac{\max(G_x, G_y)}{G_x + G_y}, & G_x < G_y \\ \dfrac{\min(G_x, G_y)}{G_x + G_y}, & G_x \geq G_y \end{cases}$$

$$w1 = 1 - w0$$

According to Equation 16, when $G_x$ is less than $G_y$, w0 may be determined based on the maximum value of $G_x$ and $G_y$. On the other hand, when $G_x$ is greater than or equal to $G_y$, w0 may be determined based on the minimum value of $G_x$ and $G_y$. w1 may be determined as a value obtained by subtracting w0 from 1.

A larger weight may be assigned to a prediction sample that refer to a neighboring region where a gradient is relatively large. In this way, by considering local variations within the neighboring region in addition to the linear variations in the horizontal/vertical directions within the current block, the prediction performance may be improved.

Alternatively, when the first gradient and the second gradient described above are referred to as $G_x$ and $G_y$, respectively, the weight may be determined as in the following Equation 17. When the number of available reference samples in the first neighboring region and the number of available reference samples in the second neighboring region are different from each other, $G_x$ and/or $G_y$ may be normalized values.

[Equation 17]

$$w0 = \begin{cases} \dfrac{\max(G_x, G_y)}{G_x + G_y}, & G_x \geq G_y \\ \dfrac{\min(G_x, G_y)}{G_x + G_y}, & G_x < G_y \end{cases}$$

$$w1 = 1 - w0$$

According to Equation 17, when $G_x$ is greater than or equal to $G_y$, w0 may be determined based on the maximum value of $G_x$ and $G_y$. On the other hand, when $G_x$ is less than $G_y$, w0 may be determined based on the minimum value of $G_x$ and $G_y$. w1 may be determined as a value obtained by subtracting w0 from 1.

A larger weight may be assigned to a prediction sample that refer to a neighboring region where the gradient is relatively small. In this way, prediction performance can be improved by applying less local variation within the reference sample to limit unintended artifacts.

The weight may be determined based on at least one of whether the width (W) and the height (H) of the current block are the same or whether the width (W) of the current block is greater than the height (H) of the current block.

For example, when the first gradient and the second gradient described above are $G_x$ and $G_y$, respectively, the weight may be determined as in the following Equation 18. When the number of available reference samples in the first neighboring region and the number of available reference samples in the second neighboring region are different from each other, $G_x$ and/or $G_y$ may be normalized values.

[Equation 18]

$$w0 = \begin{cases} \dfrac{\max(G_x, G_y)}{G_x + G_y}, & H < W \\ \dfrac{\min(G_x, G_y)}{G_x + G_y}, & H > W \\ 0.5, & H = W \end{cases}$$

$$w1 = 1 - w0$$

According to Equation 18, when W is greater than H, w0 may be determined based on the maximum value of $G_x$ and $G_y$. On the other hand, when W is less than H, w0 may be determined based on the minimum value of $G_x$ and $G_y$. When W and H are equal, w0 may be determined as 0.5. w1 may be determined as a value obtained by subtracting w0 from 1.

When the width of the current block is greater than the height, there may be a case where the correlation between the top reference sample and the current block is low, in which case horizontal linear interpolation may be more accurate than vertical linear interpolation. Conversely, when the width of the current block is less than the height, there may be a case where the correlation between the left reference sample and the current block is low, in which case vertical linear interpolation may be more accurate than horizontal linear interpolation. In this way, by assigning a large weight to the direction in which linear interpolation prediction is expected to be more accurate, it is expected that the prediction performance will be improved.

Alternatively, when the first gradient and the second gradient described above are $G_x$ and $G_y$, respectively, the weight may be determined as in the following Equation 19. When the number of available reference samples in the first neighboring region and the number of available reference samples in the second neighboring region are different from each other, $G_x$ and/or $G_y$ may be normalized values.

[Equation 19]

$$w0 = \begin{cases} \dfrac{\max(G_x, G_y)}{G_x + G_y}, & H > W \\ \dfrac{\min(G_x, G_y)}{G_x + G_y}, & H < W \\ 0.5, & H = W \end{cases}$$

$$w1 = 1 - w0$$

According to Equation 19, when W is less than H, w0 may be determined based on the maximum value of $G_x$ and $G_y$. On the other hand, when W is greater than H, w0 may be determined based on the minimum value of $G_x$ and $G_y$. When W and H are equal, w0 may be determined as 0.5. w1 may be determined as the value obtained by subtracting w0 from 1.

When the width of the current block is greater than the height, vertical linear interpolation has a shorter distance from the reference sample than horizontal linear interpolation, so the prediction is more likely to be accurate. Conversely, when the width of the current block is less than the height, horizontal linear interpolation has a shorter distance from the reference sample than vertical linear interpolation, so the prediction is more likely to be accurate. In this way, by assigning a large weight to the direction in which linear interpolation prediction is expected to be more accurate, it is expected that the prediction performance will be improved.

The weights calculated in the above-described Embodiments 1 to 3 may be approximated or scaled as integers rather than decimals less than 1. For example, when scaled by $2^8$, the weight may be expressed as in the following Equation 20. In this case, the final prediction sample ($pred_{Final}$) for the current sample may be derived as in the following Equation 21. Here, the offset may be $2^7$.

[Equation 20]

$$w0' = w0 \ll 8$$

$$w1' = 2^8 - w0'$$

[Equation 21]

$$pred_{Final}(x, y) = (w0' * pred_{Horizontal} + w1' * pred_{vertical} + offset) \gg 8$$

The gradient-based weight determination method described above may be adaptively used based on the difference between the first gradient and the second gradient calculated from the neighboring region. For example, when the difference between the first gradient and the second gradient is greater than or equal to a predetermined threshold, the gradient-based weight determination method may be used. On the other hand, when the difference between the first gradient and the second gradient is less than the predetermined threshold, the gradient-based weight determination method may not be used. In this case, the weight pre-set in the encoding device and the decoding device described above may be used.

Alternatively, the gradient-based weight determination method described above may be adaptively used based on the size of the current block. For example, when the size of the current block is less than or equal to a predetermined threshold size, the gradient-based weight determination method may be used. On the other hand, when the difference between the first gradient and the second gradient is less than a predetermined threshold value, the gradient-based weight determination method may not be used. In this case, the weight pre-set in the encoding device and the decoding device described above may be used.

Alternatively, the gradient-based weight determination method described above may be adaptively used based on a flag. Here, the flag may indicate whether the gradient-based weight determination method is used. The flag may be encoded in the encoding device and signaled to the decoding device. For example, when the flag indicates that the gradient-based weight determination method is used, the gradient-based weight determination method may be used. Otherwise, the gradient-based weight determination method may not be used. In this case, the weight pre-set in the encoding device and the decoding device described above may be used.

Alternatively, the gradient-based weight determination method described above may be adaptively used based on whether the reference sample is available. Here, examples of cases where the reference sample is not available include the case where all or some of the current block is located at the boundary of the current picture, the case where all or some of the current block is located at the boundary of a slice/tile within the current picture, the case where all or some of the current block is located at the boundary of a coding tree unit (CTU), and the case where a neighboring block of the current block is a block coded based on an inter mode.

For example, when the top reference sample and the left reference sample are available, the gradient-based weight determination method may be used. Otherwise, the gradient-based weight determination method may not be used. In this case, the weight pre-set in the encoding device and the decoding device as described above may be used. Alternatively, when the first neighboring region and the second neighboring region are available, the gradient-based weight determination method may be used. Otherwise, the gradient-based weight determination method may not be used. In this case, the weight pre-set in the encoding device and the decoding device, as described above, may be used. Alternatively, when either the first neighboring region or the second neighboring region is available, the gradient-based weight determination method may be used. Otherwise (i.e., when the first and second neighboring regions are not available), the gradient-based weight determination method may not be used. In this case, the weight pre-set in the encoding device and the decoding device, as described above, may be used.

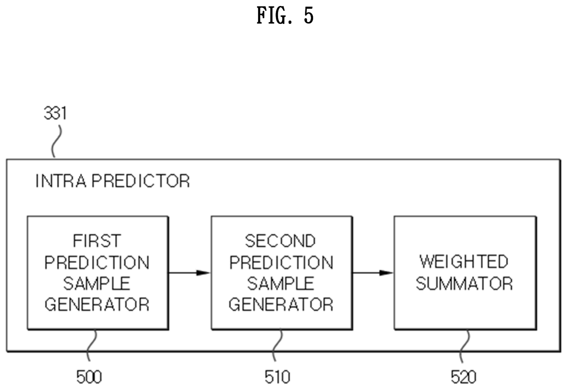

FIG. 5 illustrates a schematic configuration of an intra predictor (331) that performs an image decoding method according to the present disclosure.

Referring to FIG. 5, the intra predictor (331) may include a first prediction sample generator (500), a second prediction sample generator (510), and a weighted summator (520).

The first prediction sample generator (500) may generate a first prediction sample for the current sample in the current block. The method for generating the first prediction sample is as described with reference to FIG. 4.

The second prediction sample generator (510) may generate a second prediction sample for the current sample. The method for generating the second prediction sample is as described with reference to FIG. 4.

The weighted summator (520) may generate a final prediction sample for the current sample based on the weighted sum of the first prediction sample and the second prediction sample. Here, the weight for the weighted sum may be set to a weight pre-set identically to the encoding device and the decoding device. Alternatively, the weight may be determined based on one or more gradients calculated from the neighboring region of the current block, as described with reference to FIG. 4.

The weighted summator (520) may adaptively use a gradient-based weight determination method based on at least one of the difference between the first and second gradients calculated from the neighboring region of the current block, the size of the current block, a flag, or whether the reference sample is available. This is as described with reference to FIG. 4.

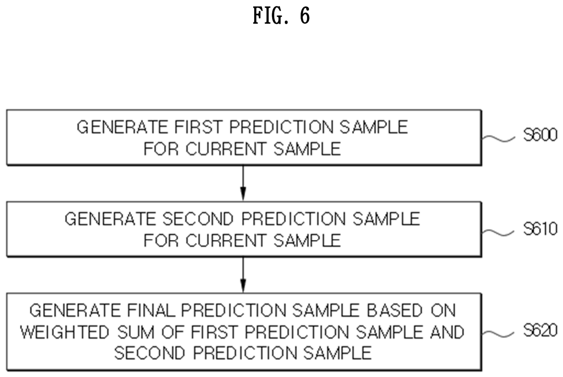

FIG. 6 shows an image encoding method performed in an encoding apparatus according to the present disclosure.

Referring to Fig. 6, a first prediction sample for a current sample in a current block may be generated (S600). The method for generating the first prediction sample is as described with reference to Fig. 4.

Referring to Fig. 6, a second prediction sample for the current sample may be generated (S610). The method for generating the second prediction sample is as described with reference to Fig. 4.

Referring to FIG. 6, a final prediction sample for a current sample may be generated based on a weighted sum of the first prediction sample and the second prediction sample (S620). Here, the weight for the weighted sum may be set to a weight pre-set identically to the encoding device and the decoding device. Alternatively, the weight may be determined based on one or more gradients calculated from a neighboring region of the current block, as described with reference to FIG. 4.

The gradient-based weight determination method described above may be adaptively used based on at least one of the difference between the first and second gradients calculated from the neighboring region of the current block, the size of the current block, a flag, or whether the reference sample is available. This is as described with reference to Fig. 4. It may be determined whether the gradient-based weight determination method is used and a flag indicating this may be generated. The generated flag may be encoded and inserted into a bitstream.

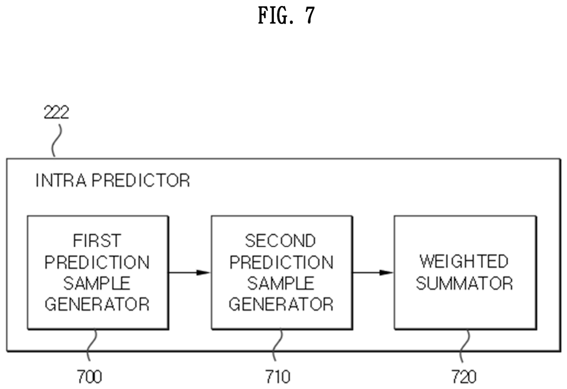

FIG. 7 illustrates a schematic configuration of an intra predictor (222) that performs an image encoding method according to the present disclosure.

Referring to FIG. 7, the intra predictor (220) may include a first prediction sample generator (700), a second prediction sample generator (710), and a weighted summator (720).

The first prediction sample generator (700) may generate a first prediction sample for the current sample in the current block. The method for generating the first prediction sample is as described with reference to FIG. 4.

The second prediction sample generator (710) may generate a second prediction sample for the current sample. The method for generating the second prediction sample is as described with reference to FIG. 4.

The weighted summator (720) may generate a final prediction sample for the current sample based on the weighted sum of the first prediction sample and the second prediction sample. Here, the weight for the weighted sum may be set to a weight pre-set identically to the encoding device and the decoding device. Alternatively, the weight may be determined based on one or more gradients calculated from the neighboring region of the current block, as described with reference to FIG. 4.

The weighted summator (720) may adaptively use the gradient-based weight determination method based on at least one of the difference between the first and second gradients calculated from the neighboring region of the current block, the size of the current block, a flag, or whether the reference sample is available. This is as described with reference to FIG. 4.

The intra predictor (222) may determine whether the gradient-based weight determination method is used and generate a flag indicating this. The generated flag may be encoded and inserted into the bitstream.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

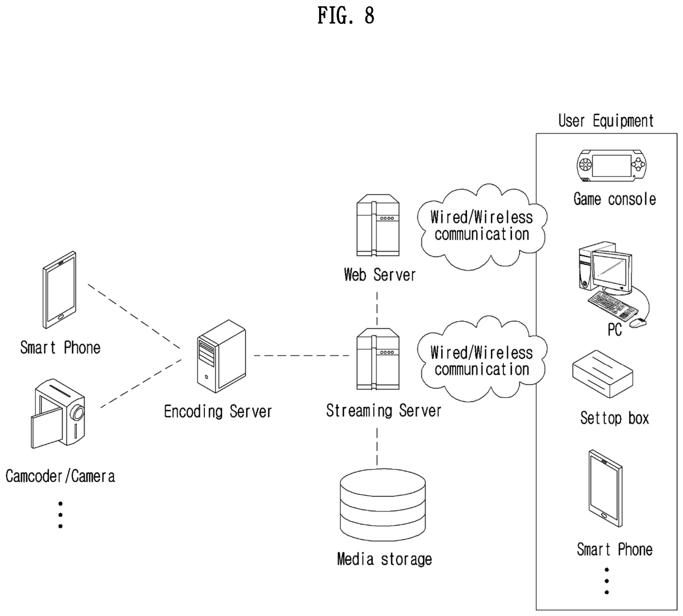

FIG. 8 shows an example of a contents streaming system to which embodiments of the present disclosure may be applied.

Referring to FIG. 8, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

**Claims**

1. A method for decoding an image, comprising:

   generating a first prediction sample for a current sample in a current block based on a left reference sample of the current block;
   generating a second prediction sample for the current sample based on a top reference sample of the current block; and
   generating a final prediction sample for the current sample based on a weighted sum of the first prediction sample and the second prediction sample,
   wherein a weight for the weighted sum includes a first weight applied to the first prediction sample and a second weight applied to the second prediction sample, and
   wherein the first weight is determined based on one or more gradients calculated from a neighboring region of the current block.

2. The method of claim 1, wherein the gradients calculated from the neighboring region include a first gradient and a second gradient,

wherein the neighboring region is divided into a first neighboring region and a second neighboring region, and wherein the first neighboring region is a region including one or more reference samples belonging to a top neighboring block of the current block, and the second neighboring region is a region including one or more reference samples belonging to a left neighboring block of the current block.

3. The method of claim 2, wherein the first gradient is derived based on one or more gradients calculated from the first neighboring region of the current block, and
wherein the second gradient is derived based on one or more gradients calculated by applying the one-dimensional filter to the second neighboring region of the current block.

4. The method of claim 2, wherein the first gradient is derived based on one or more horizontal gradients calculated from the first neighboring region of the current block, and
wherein the second gradient is derived based on one or more vertical gradients calculated from the second neighboring region of the current block.

5. The method of claim 2, wherein the first gradient is derived based on one or more horizontal gradients calculated from the first neighboring region of the current block and one or more horizontal gradients calculated from the second neighboring region of the current block, and
wherein the second gradient is derived based on one or more vertical gradients calculated from the first neighboring region of the current block and one or more vertical gradients calculated from the second neighboring region of the current block.

6. The method of claim 2, wherein the first gradient is determined based on whether the first gradient is less than the second gradient.

7. The method of claim 6, wherein when the first gradient is less than the second gradient, the first weight is determined based on a maximum value of the first gradient and the second gradient, and
wherein when the first gradient is greater than or equal to the second gradient, the first weight is determined based on a minimum value of the first gradient and the second gradient.

8. The method of claim 6, wherein when the first gradient is greater than or equal to the second gradient, the first weight is determined based on a maximum value of the first gradient and the second gradient, and
wherein when the first gradient is less than the second gradient, the first weight is determined based on a minimum value of the first gradient and the second gradient.

9. The method of claim 2, wherein the first weight is determined based on at least one of whether a width of the current block is greater than a height of the current block or whether the width and the height of the current block is equal.

10. The method of claim 9, wherein when the width of the current block is less than the height of the current block, the first weight is determined based on a maximum value of the first gradient and the second gradient, and
wherein when the width of the current block is greater than or equal to the height of the current block, the first weight is determined based on a minimum value of the first gradient and the second gradient.

11. The method of claim 9, wherein when the width of the current block is greater than or equal to the height of the current block, the first weight is determined based on a maximum value of the first gradient and the second gradient, and
wherein when the width of the current block is less than the height of the current block, the first weight is determined based on a minimum value of the first gradient and the second gradient.

12. The method of claim 1, wherein a weight determination based on the one or more gradients is adaptively performed based on at least one of a difference between the gradients calculated from the neighboring region, a size of the current block, a flag, or whether a reference sample in the neighboring region is available.

13. A method for encoding an image, comprising:

generating a first prediction sample for a current sample in a current block based on a left reference sample of the current block;
generating a second prediction sample for the current sample based on a top reference sample of the current block; and

generating a final prediction sample for the current sample based on a weighted sum of the first prediction sample and the second prediction sample,
wherein a weight for the weighted sum includes a first weight applied to the first prediction sample and a second weight applied to the second prediction sample, and
wherein the first weight is determined based on one or more gradients calculated from a neighboring region of the current block.

14. A computer-readable storage medium storing a bitstream generated by an image encoding method according to claim 11.

15. A method for transmitting data, comprising:

obtaining a bitstream for iamge information, wherein the bitstream is generated based on generating a first prediction sample for a current sample in a current block based on a left reference sample of the current block, generating a second prediction sample for the current sample based on a top reference sample of the current block, and generating a final prediction sample for the current sample based on a weighted sum of the first prediction sample and the second prediction sample; and
transmitting the data including the bitstream,
wherein a weight for the weighted sum includes a first weight applied to the first prediction sample and a second weight applied to the second prediction sample, and
wherein the first weight is determined based on one or more gradients calculated from a neighboring region of the current block.

FIG.1

# FIG.2

EP 4 651 492 A1

**FIG.3**

**FIG.4**

| GENERATE FIRST PREDICTION SAMPLE FOR CURRENT SAMPLE | S400 |

| GENERATE SECOND PREDICTION SAMPLE FOR CURRENT SAMPLE | S410 |

| GENERATE FINAL PREDICTION SAMPLE BASED ON WEIGHTED SUM OF FIRST PREDICTION SAMPLE AND SECOND PREDICTION SAMPLE | S420 |

FIG. 5

331

INTRA PREDICTOR

| FIRST PREDICTION SAMPLE GENERATOR | SECOND PREDICTION SAMPLE GENERATOR | WEIGHTED SUMMATOR |

500 510 520

FIG. 6

```
┌─────────────────────────────────────────────────┐
│         GENERATE FIRST PREDICTION SAMPLE         │ ～ S600
│              FOR CURRENT SAMPLE                  │
└─────────────────────────────────────────────────┘
                        │
                        ▼
┌─────────────────────────────────────────────────┐
│        GENERATE SECOND PREDICTION SAMPLE         │ ～ S610
│              FOR CURRENT SAMPLE                  │
└─────────────────────────────────────────────────┘
                        │
                        ▼
┌─────────────────────────────────────────────────┐
│    GENERATE FINAL PREDICTION SAMPLE BASED ON     │ ～ S620
│  WEIGHTED SUM OF FIRST PREDICTION SAMPLE AND     │
│          SECOND PREDICTION SAMPLE                │
└─────────────────────────────────────────────────┘
```

FIG. 7

222

INTRA PREDICTOR

| FIRST PREDICTION SAMPLE GENERATOR | SECOND PREDICTION SAMPLE GENERATOR | WEIGHTED SUMMATOR |

700         710         720

FIG. 8

## INTERNATIONAL SEARCH REPORT

| International application No. |
|---|
| **PCT/KR2024/000471** |

| **A.** | **CLASSIFICATION OF SUBJECT MATTER** |
|---|---|

**H04N 19/593**(2014.01)i; **H04N 19/11**(2014.01)i; **H04N 19/132**(2014.01)i; **H04N 19/59**(2014.01)i; **H04N 19/176**(2014.01)i; **H04N 19/119**(2014.01)i

According to International Patent Classification (IPC) or to both national classification and IPC

| **B.** | **FIELDS SEARCHED** |
|---|---|

Minimum documentation searched (classification system followed by classification symbols)

H04N 19/593(2014.01); H04N 19/109(2014.01); H04N 19/11(2014.01); H04N 19/119(2014.01); H04N 19/122(2014.01); H04N 19/129(2014.01); H04N 19/46(2014.01); H04N 19/577(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 블록(block), 좌측(left), 상단(top), 참조 샘플(reference sample), 예측 샘플 (prediction sample), 가중합(weighted sum), 가중치(weight factor), 그레디언트(gradient), 일차원 필터(one-dimensional filter), 너비(width), 높이(height)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | KR 10-2018-0126384 A (KT CORPORATION) 27 November 2018 (2018-11-27)<br>See paragraph [0275]; and claims 1-3. | 1-5,9-15 |
| A | | 6-8 |
| Y | KR 10-2022-0002207 A (ELECTRONICS AND TELECOMMUNICATIONS RESEARCH INSTITUTE) 06 January 2022 (2022-01-06)<br>See paragraph [0429]. | 1-5,9-15 |
| Y | KR 10-2018-0071350 A (SAMSUNG ELECTRONICS CO., LTD.) 27 June 2018 (2018-06-27)<br>See paragraph [0071]. | 3-5 |
| Y | KR 10-2019-0028325 A (KT CORPORATION) 18 March 2019 (2019-03-18)<br>See claims 1 and 6-7. | 9-12 |

| ✓ | Further documents are listed in the continuation of Box C. | ✓ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 April 2024** | **25 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/000471**

### C. DOCUMENTS CONSIDERED TO BE RELEVANT

| Category* | Citation of document, with indication, where appropriate, of the relevant passages | Relevant to claim No. |
|---|---|---|
| A | KR 10-2021-0091322 A (HUAWEI TECHNOLOGIES CO., LTD.) 21 July 2021 (2021-07-21)<br>See claims 1-21. | 1-15 |

Form PCT/ISA/210 (second sheet) (July 2022)

# EP 4 651 492 A1

## INTERNATIONAL SEARCH REPORT
### Information on patent family members

International application No.

**PCT/KR2024/000471**

| Patent document cited in search report | | | Publication date (day/month/year) | Patent family member(s) | | | Publication date (day/month/year) |
|---|---|---|---|---|---|---|---|
| KR | 10-2018-0126384 | A | 27 November 2018 | US | 11184639 | B2 | 23 November 2021 |
| | | | | US | 11706446 | B2 | 18 July 2023 |
| | | | | US | 2020-0366930 | A1 | 19 November 2020 |
| | | | | US | 2022-0046278 | A1 | 10 February 2022 |
| | | | | US | 2023-0291929 | A1 | 14 September 2023 |
| | | | | WO | 2018-212579 | A1 | 22 November 2018 |
| KR | 10-2022-0002207 | A | 06 January 2022 | KR | 10-2345475 | B1 | 03 January 2022 |
| | | | | KR | 10-2558803 | B1 | 25 July 2023 |
| | | | | WO | 2017-119540 | A1 | 13 July 2017 |
| KR | 10-2018-0071350 | A | 27 June 2018 | EP | 3364655 | A1 | 22 August 2018 |
| | | | | JP | 2018-533871 | A | 15 November 2018 |
| | | | | KR | 10-2023-0057479 | A | 28 April 2023 |
| | | | | KR | 10-2437109 | B1 | 26 August 2022 |
| | | | | KR | 10-2525033 | B1 | 24 April 2023 |
| | | | | US | 11153601 | B2 | 19 October 2021 |
| | | | | US | 2018-0376165 | A1 | 27 December 2018 |
| | | | | US | 2022-0078482 | A1 | 10 March 2022 |
| | | | | WO | 2017-082698 | A1 | 18 May 2017 |
| KR | 10-2019-0028325 | A | 18 March 2019 | US | 11184606 | B2 | 23 November 2021 |
| | | | | US | 11700366 | B2 | 11 July 2023 |
| | | | | US | 2020-0099925 | A1 | 26 March 2020 |
| | | | | US | 2022-0046235 | A1 | 10 February 2022 |
| | | | | US | 2023-0300324 | A1 | 21 September 2023 |
| | | | | WO | 2019-050292 | A1 | 14 March 2019 |
| KR | 10-2021-0091322 | A | 21 July 2021 | EP | 3881549 | A1 | 22 September 2021 |
| | | | | EP | 3881549 | B1 | 06 March 2024 |
| | | | | EP | 4307673 | A2 | 17 January 2024 |
| | | | | EP | 4307673 | A3 | 14 February 2024 |
| | | | | JP | 2022-514885 | A | 16 February 2022 |
| | | | | JP | 2023-100834 | A | 19 July 2023 |
| | | | | US | 2022-0124368 | A1 | 21 April 2022 |
| | | | | WO | 2020-130889 | A1 | 25 June 2020 |

Form PCT/ISA/210 (patent family annex) (July 2022)